# EUROPÄISCHE PATENTSCHRIFT

(11) **EP 1 941 174 B1**
(45) Veröffentlichungstag und Bekanntmachung des Hinweises auf die Patenterteilung: **25.11.2009**
(21) Anmeldenummer: 06806351.0
(22) Anmeldetag: 17.10.2006
(51) Int. Cl.: F16D 65/14, B60T 7/10, B60T 13/74

(54) **HYDRAULISCHE FAHRZEUGBREMSE**
HYDRAULIC VEHICLE BRAKE
FREIN HYDRAULIQUE DE VEHICULE

(30) Priorität: 25.10.2005 DE 102005051082
(43) Veröffentlichungstag der Anmeldung: 09.07.2008
(73) Patentinhaber: Lucas Automotive GmbH, 56070 Koblenz (DE)
(72) Erfinder: LEITER, Ralf, 56743 Mendig (DE); ERBEN, Ralf, 56132 Kemmenau (DE); DILLA, Christian, 56170 Bendorf (DE)
(74) Vertreter: Röthinger, Rainer
(86) Internationale Anmeldenummer: PCT/EP2006/010030
(87) Internationale Veröffentlichungsnummer: WO 2007/048532

(56) Entgegenhaltungen:
- DE-A1- 1 775 880
- DE-C- 671 093
- DE-C1- 19 732 168

## Beschreibung

### Gebiet der Erfindung

Die Erfindung ist allgemein auf Fahrzeugsbremsanlagen gerichtet. Im Besonderen betrifft die Erfindung eine hydraulische Fahrzeugsbremse mit einer Hydraulikkammer und einem die Hydraulikkammer begrenzenden Bremskolben.

### Hintergrund der Erfindung

Aus der DE 197 32 168 A ist eine hydraulische Fahrzeugbremse bekannt, bei der ein Reibbelag mittels eines Bremskolbens durch Hydraulikdruck gegen eine Bremsscheibe gepresst werden kann, um bei einer Betriebsbremsung deren Drehung abzubremsen. Hierzu wird in üblicher Weise Hydraulikfluid unter Druck in eine Hydraulikkammer eingeleitet, deren eine Begrenzungswand durch den Bremskolben gebildet ist. Der Druck in der Hydraulikkammer führt zu einer Verschiebung des Bremskolbens und damit auch des Reibbelags in Richtung auf die Bremsscheibe. Sobald der Reibbelag in Anlage an die sich drehende Bremsscheibe gelangt, wird das Fahrzeug abgebremst.

Damit die Fahrzeugbremse nicht nur als Betriebsbremse, sondern darüber hinaus als Feststellbremse - auch Parkbremse genannt - verwendet werden kann, weist sie eine Feststelleinrichtung zum mechanischen Feststellen des Bremskolbens in einem Zustand auf, in dem der Reibbelag sich in Eingriff mit der Bremsscheibe befindet. Bei der aus der DE 197 32 168 A bekannten Fahrzeugbremse ist die Feststelleinrichtung als eine Mutter/Spindel-Anordnung ausgebildet.

Aus der DE 1 775 880 ist eine selbsttätige Rückhol- und Nachstellvorrichtung für einen hydraulisch betätigbaren Bremskolben bekannt. Der Bremskolben ist in einem Bremszylinder aufgenommen und ein im Bremszylinder verbleibender, nicht für Rückhol- und Nachstellzwecke benötigter Raum ist durch einen Füllkörper aus Kunststoff ausgefüllt.

Der Erfindung liegt die Aufgabe zu Grunde vor, eine hydraulische Fahrzeugbremse anzugeben, die mit einem geringeren Hydraulikfluidvolumen betrieben werden kann.

### Kurzer Abriss der Erfindung

Diese Aufgabe wird gelöst durch eine hydraulische Fahrzeugbremse mit einer Hydraulikkammer zur Aufnahme von Hydraulikfluid und einem die Hydraulikkammer begrenzenden Bremskolben, wobei innerhalb der Hydraulikkammer zur Reduzierung der Hydraulikfluidaufnahme wenigstens ein Füllkörper vorgesehen ist. Der Füllkörper ist einer sich in die Hydraulikkammer erstreckenden mechanischen Feststelleinrichtung für den Bremskolben zugeordnet.

Bei dem Füllkörper kann es sich um ein separates Bauteil handeln, das mechanisch innerhalb der Hydraulikkammer an einer Komponente der Fahrzeugbremse befestigt ist. Der Füllkörper kann auf unterschiedliche Weise mechanisch befestigt werden. Als mögliche Befestigungsarten sind beispielsweise das Aufstecken (z.B. rastend oder kraftschlüssig), die Verwendung von Verbindungselementen wie Klipsen oder das Ankleben zu nennen. Jeder Füllkörper kann einstückig oder mehrstückig ausgebildet sein. Gemäß einer bevorzugten Variante besteht der Füllkörper aus einem inkompressiblen Material (beispielsweise aus einem nicht-metallischen Material wie Kunststoff oder einem metallischen Material wie Aluminium).

Gemäß einer ersten Ausführung ist der wenigstens eine Füllkörper der Feststelleinrichtung zugeordnet und vorzugsweise im Bremskolben aufgenommen. Insbesondere bei einer Feststelleinrichtung mit im Wesentlichen zylindrischer Gestalt kann der wenigstens eine Füllkörper außen an der Feststelleinrichtung vorgesehen werden. Zu diesem Zweck kann der Füllkörper lose und z. B. entlang der Feststelleinrichtung geführt beweglich vorgesehen sein. Alternativ hierzu kann ein Fixierring mit Haltearmen, die den Füllkörper bezüglich der Feststelleinrichtung fixieren, verwendet werden. Diese Ansätze sind beispielsweise dann zweckmäßig, wenn die Feststelleinrichtung eine Mutter/Spindel-Anordnung umfasst. Zusätzlich kann der wenigstens eine Füllkörper gemäß einer zweiten Ausführung dem Bremskolben zugeordnet sein. Bei einem Bremskolben mit im Wesentlichen hohlzylindrischer Gestalt kann der wenigstens eine Füllkörper beispielsweise innen am Bremskolben anliegen.

Der wenigstens eine Füllkörper kann eine beliebige Form aufweisen. Gemäß einer ersten Variante besitzt der Füllkörper (oder eine Gesamtheit mehrerer Füllkörper) eine im Wesentlichen ringförmige oder hohlzylindrische Gestalt. Gemäß einer zweiten Variante besitzt der oder jeder Füllkörper einen im Wesentlichen blockförmigen Aufbau. Weitere Varianten sind denkbar.

Der wenigstens eine Füllkörper kann einen sich im Wesentlichen entlang einer Längsachse der Hydraulikkammer erstreckenden Durchlass für Hydraulikfluid aufweisen. Der Durchlass ist beispielsweise als Bohrung oder als Nut ausgebildet.

Des Weiteren ist es möglich, verschiedene Füllkörper-Typen unterschiedlicher Größe (z.B. von unterschiedlicher Länge, unterschiedlicher Dicke oder unterschiedlichem Durchmesser) bereitzuhalten, um basierend auf standardisierten Komponenten das Volumen der Hydraulikkammer herstellungsseitig einstellen zu können. Der einzelne Füllkörper oder die Gesamtheit aller Füllkörper kann ein Volumen von ungefähr 0,1 bis 0,5 cm³ besitzen. Entsprechend reduziert sich das Hydraulikfluid, welches innerhalb der Hydraulikkammer aufgenommen werden kann, um beispielsweise 5 bis 20%.

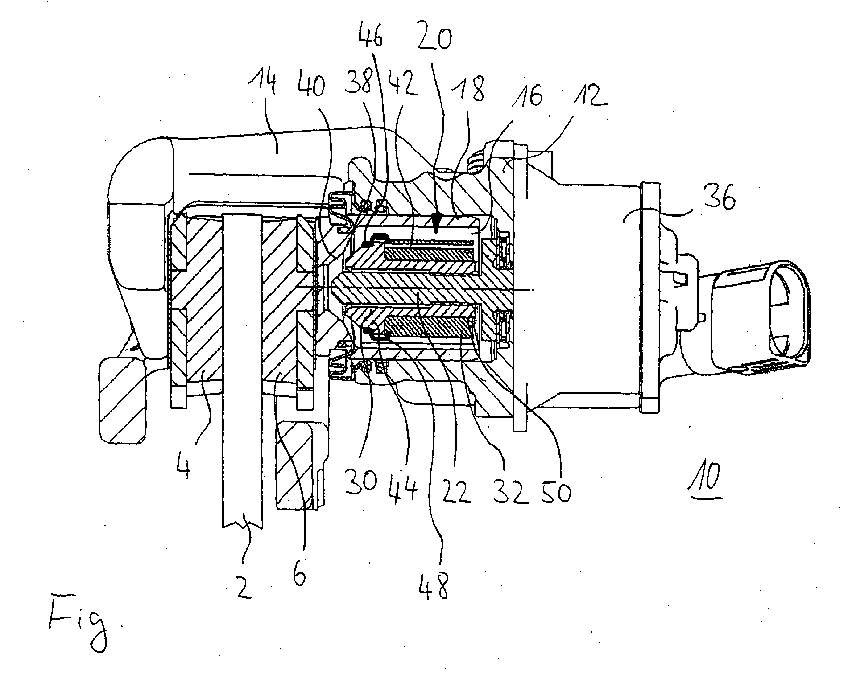

### Kurze Beschreibung der Zeichnung

Weitere Vorteile und Ausgestaltungen der Erfindung ergeben sich aus der nachfolgenden Beschreibung eines bevorzugten Ausführungsbeispiels sowie aus der beigefügten Figur. Die Figur zeigt ein Ausführungsbeispiel einer hydraulischen Fahrzeugsbremse in einer teilweisen Schnittansicht.

### Beschreibung eines bevorzugten Ausführungsbeispiels

Die in der einzigen Figur dargestellte und allgemein mit 10 bezeichnete Fahrzeugbremse ist hier als Schwimmsattel-Scheibenbremse ausgeführt, die in bekannter Weise ein Gehäuse 12 aufweist, an dem ein Schwimmsattel 14 einstückig ausgebildet ist. Der Schwimmsattel 14 übergreift eine Bremsscheibe 2. An die Bremsscheibe 2 sind zwei sich bezüglich der Bremsscheibe 2 gegenüberliegende Reibbeläge 4, 6 anpressbar, um ein Fahrzeug bei einer Betriebsbremsung abzubremsen oder - für den Fall des Feststellbremsbetriebs - im Stillstand zu halten.

Im Gehäuse 12 befindet sich eine Hydraulikkammer 16, in der ein zylindrischer Bremskolben 18 abdichtend und entlang einer Längsachse A verschieblich aufgenommen ist. Die Hydraulikkammer 16 wird über einen in der Figur nicht dargestellten Anschluss, der mit einer Bremsdruckgebereinheit in Verbindung steht, von außen mit Hydraulikfluid versorgt. Bei einer Betätigung der Bremsdruckgebereinheit (insbesondere bei einer Betriebsbremsung) wird das Hydraulikfluid in der Hydraulikkammer 16 unter Druck gesetzt, so dass sich der Bremskolben 18 entlang der Achse A nach links verschiebt, um die Reibbeläge 4, 6 mit der Bremsscheibe 2 in Reibungseingriff zu bringen.

Damit die Fahrzeugbremse 10 nicht nur die zuvor erläuterte Funktion einer hydraulischen Betriebsbremse erfüllen kann, sondern darüber hinaus auch als Feststellbremse verwendet werden kann, ist eine allgemein mit 20 bezeichnete Mutter/Spindel-Anordnung vorgesehen. Die Mutter/Spindel-Anordnung 20 umfasst eine koaxial zur Achse A angeordnete Spindel 22 mit einem Außengewinde sowie eine im Wesentlichen hülsenförmige Mutter 30 mit einem zum Außengewinde der Spindel 22 komplementären Innengewinde. Radial außen ist auf der Mutter 30 ein im Wesentlichen hohlzylindrischer Füllkörper 32 drehfest bezüglich der Mutter 30 angeordnet. Der Aufbau und die Funktion des Füllkörpers 32 werden später ausführlicher erörtert.

Die Aufgabe der Mutter/Spindel-Anordnung 20 im Feststellbremsbetrieb ist es, eine Drehbewegung der Spindel 22 in eine Translationsbewegung der Mutter 30 umzusetzen. Die Mutter 30 wird dabei mittels einer in sie (genauer gesagt in eine Durchmessererweiterung 44 der Mutter 30) und optional in den Füllkörper 32 eingreifenden und aus dem Bremskolben 18 in Richtung auf die Achse A hervorstehenden Verdrehsicherung in Gestalt einer Rippe 34 an einer Drehung gehindert.

Wie aus der Figur gut zu erkennen ist, ist der Bremskolben 18 als rechtsseitig offener Hohlkolben ausgeführt, und die Mutter/Spindel-Anordnung 20 befindet sich zum größten Teil innerhalb des hohlen Bremskolbens 18 und somit innerhalb der Hydraulikkammer 16. Zum Drehantrieb der Spindel 20 dient ein zusammen mit einem Untersetzungsgetriebe in einem Gehäuse 36 untergebrachter Elektromotor.

Zum Feststellen der Fahrzeugbremse 10 wird zunächst der Elektromotor derart angesteuert, das die Spindel 22 sich in einer ersten Richtung dreht, in der durch Herausschrauben der Mutter 30 eine Verlängerung der Mutter/Spindel-Anordnung 20 bewirkt wird. Die Mutter 30 wird also bezogen auf die Figur längs der Achse A translatorisch nach links verschoben und gelangt dabei mit ihrem konisch ausgebildeten Kopfende 38 in Anlage an den ebenfalls konisch ausgebildeten Boden 40 des Bremskolbens 18. Bei einer weiteren Drehung der Spindel 22 in der ersten Drehrichtung drückt dann die Mutter 30 den Bremskolben 18 nach links, wodurch letzterer den Reibbelag 6 gegen die Bremsscheibe 2 presst. Aufgrund der Ausgestaltung der Fahrzeugbremse 10 als Schwimmsattelbremse wird von dieser Bewegung des Reibbelags 6 auch der gegenüberliegende Reibbelag 4 erfasst und gegen die Bremsscheibe 2 gepresst. Ist dieser Zustand erreicht, kann der Elektromotor abgestellt werden. Da die Gewindepaarung zwischen der Spindel 22 und der Mutter 30 selbsthemmend auslegt ist, bleibt die erreichte Stellung der Mutter/Spindel-Anordnung 20 auch nach dem Abschalten des Elektromotors erhalten.

Zum Lösen der Feststellbremse wird der Elektromotor so angesteuert, das die Spindel 22 in die entgegengesetzte Richtung gedreht wird. Die oben erläuterten Schritte laufen dann in der umgekehrten Reihenfolge ab.

Im vorliegenden Ausführungsbeispiel wird der Bremsdruck im Feststellbremsbetrieb ausschließlich durch den Elektromotor erzeugt. Es wäre jedoch auch möglich, den Bremsdruckaufbau im Feststellbremsbetrieb durch eine Hydraulikpumpe zu unterstützen. In diesem Fall beschränkt sich die Aufgabe der mechanischen Feststelleinrichtung auf das bloße Halten eines hydraulisch erzeugten Bremsdrucks. Der Elektromotor kann in diesem Fall kleiner dimensioniert werden.

Der bereits erwähnte Füllkörper 32 besitzt die Aufgabe, das Volumen der Hydraulikkammer 16 und damit die Hydraulikfluid-Aufnahmefähigkeit der Hydraulikkammer 16 zu reduzieren. Dieser Ansatz gestattet es, das Hydraulikfluidvolumen im Bremssystem insgesamt um typischerweise 10 bis 15 % zu verringern. Eine derartige Vorgehensweise ist insbesondere bei solchen Feststelleinrichtungen zweckmäßig, die eine Mutter/Spindel-Anordnung besitzen, da derartige Feststelleinrichtungen den Bremskolben nicht in dem Maß ausfüllen wie beispielsweise Feststelleinrichtungen, die einen "Ball and Ramp" -Mechanismus beinhalten. Bei den zuletzt genannten Feststelleinrichtungen ist nämlich im Bremskolben in der Regel ein Nachstellmechanismus aufgenommen, der praktisch den gesamten Kolbenraum ausfüllt. Nichtsdestotrotz ließen sich auch Feststellbremseinrichtungen nach dem "Ball and Ramp"- Prinzip mit dem hier vorgeschlagenen Ansatz des Einbringens wenigstens eines Füllkörpers in die Hydraulikkammer kombinieren.

Bei dem in der einzigen Figur dargestellten Füllkörper 32 handelt es sich um ein einziges hohlzylindrisches Element aus einem im Vergleich zum metallischen Material der Feststelleinrichtung leichten, inkompressiblen Kunststoff. Der Füllkörper 32 kann aber auch aus einem metallischen Material geringer Dichte wie Aluminium bestehen.

Der Füllkörper 32 ist radial außen auf einem verschlankten Abschnitt 50 der im Wesentlichen zylindrischen Mutter/Spindel-Anordnung 20 angeordnet. Genauer gesagt ist der Füllkörper 32 im Ausführungsbeispiel mittels eines Fixierringes 46 an der Mutter/Spindel-Anordnung 20 befestigt. Der Fixierring 46 besitzt eine Mehrzahl von Haltearmen 48, die sich über die Durchmessererweiterung 44 hinweg erstrecken und sich in rastendem Eingriff mit dem Füllkörper 32 befinden. Der Fixierring 46 selbst ist mittels einer Presspassung auf einer Stufe des konisch ausgebildeten Kopfendes 38 der Mutter 30 befestigt. Alternativ zu dem in der einzigen Figur dargestellten Ausführungsbeispiel könnte der Füllkörper 32 lose auf der Mutter/Spindel-Anordnung 20 angeordnet sein. So wäre es denkbar, dass die Mutter/Spindel-Anordnung 20 als Führung für einen in axialer Richtung bezüglich der Mutter/Spindel-Anordnung 20 beweglichen Füllkörper 32 fungiert.

Der Füllkörper 32 besitzt im Ausführungsbeispiel eine Mehrzahl von Durchlässen für das Hydraulikfluid. Die Durchlässe sind als Bohrungen 42 ausgebildet, die sich über die gesamte Länge des Füllkörpers 32 und parallel zur Achse A erstrecken. Die im Füllkörper 32 vorgesehenen Bohrungen 42 münden in entsprechende Durchlässe in der Durchmessererweiterung 44, um eine verbesserte Fluidkommunikation zwischen dem vorderen Bodenbereich 40 des Bremskolbens 18 und dessen rückwärtiger Öffnung zu ermöglichen. Abweichend von der in der Figur dargestellten Ausführungsform könnten die Durchlässe des Füllkörpers 32 auch zwischen Rippen realisiert werden, die radial außen am Füllkörper 32 ausgebildet sind.

Gemäß einem von dem in der Figur dargestellten Ausführungsbeispiel abweichenden Ausführungsbeispiel ist zusätzlich zum Füllkörper 32 oder anstatt des Füllkörpers 32 ein Füllkörper radial innen am Bremskolben 18 befestigt oder lose angeordnet. Der dem Bremskolben 18 zugeordnete Füllkörper kann im Wesentlichen hohlzylindrisch ausgebildet sein, damit im Inneren des Füllkörpers die Mutter/Spindel-Anordnung 20 aufgenommen werden kann.

Der im Bremskolben 18 aufgenommene Füllkörper 32 ist im Ausführungsbeispiel einstückig ausgebildet und besitzt ein Volumen von ungefähr 0,1 bis 0,2 cm³. Selbstverständlich könnte der Füllkörper 32 auch mehrstückig ausgebildet werden und ein größeres oder kleineres Volumen besitzen. Durch Füllkörper variabler Größe kann die Aufnahme an Hydraulikfluidvolumen innerhalb der Hydraulikkammer 16 herstellungsseitig eingestellt werden.

Das Ausführungsbeispiel bezieht sich auf eine hydraulische Fahrzeugbremse mit einer sich in die Hydraulikkammer hinein erstreckenden mechanischen Feststelleinrichtung. Abweichend von diesem Ausführungsbeispiel können Füllkörper auch im Zusammenhang mit anderweitigen hydraulischen Fahrzeugbremsen und insbesondere solchen hydraulischen Fahrzeugsbremsen, die keine mechanische Feststelleinrichtung umfassen, verwendet werden. In diesem Fall können ein oder mehrere Füllkörper beispielsweise innen liegend an einem hohlzylindrischen Bremskolben ähnlich dem in der Figur gezeigten vorgesehen werden.

## Patentansprüche

1. Hydraulische Fahrzeugbremse (10) mit einer Hydraulikkammer (16) zur Aufnahme von Hydraulikfluid und einem die Hydraulikkammer (16) begrenzenden Bremskolben (18), wobei innerhalb der Hydraulikkammer (16) zur Reduzierung der Hydraulikfluidaufnahme wenigstens ein Füllkörper (32) vorgesehen ist, **dadurch gekennzeichnet, dass** der wenigstens eine Füllkörper (32) einer sich in die Hydraulikkammer (16) erstreckenden mechanischen Feststelleinrichtung (20) für den Bremskolben (18) zugeordnet ist.

2. Fahrzeugbremse nach Anspruch 1, **dadurch gekennzeichnet,**
**dass** der wenigstens eine Füllkörper (32) ein separates Bauteil ist, das mechanisch innerhalb der Hydraulikkammer (16) an der Feststelleinrichtung (20) der Fahrzeugbremse befestigt ist.

3. Fahrzeugbremse nach Anspruch 1 oder 2, **dadurch gekennzeichnet,**
**dass** der wenigstens eine Füllkörper (32) außen an der Feststelleinrichtung (20) vorgesehen ist.

4. Fahrzeugbremse nach einem der Ansprüche 1 bis 3, **dadurch gekennzeichnet, dass** der wenigstens eine Füllkörper (32) mittels eines Verbindungselements, insbesondere mittels eines Fixierringes (46) mit Haltearmen (48), an der Feststelleinrichtung (20) befestigt ist.

5. Fahrzeugbremse nach Anspruch 1 oder 3, **dadurch gekennzeichnet, dass** der wenigstens eine Füllkörper (32) lose bezüglich der Feststelleinrichtung (20) vorgesehen ist.

6. Fahrzeugbremse nach einem der Ansprüche 1 bis 5, **dadurch gekennzeichnet, dass** der Füllkörper (32) oder eine Gesamtheit mehrerer Füllkörper eine im Wesentlichen ringförmige oder hohlzylindrische Gestalt aufweist.

7. Fahrzeugbremse nach einem der Ansprüche 1 bis 6, **dadurch gekennzeichnet, dass** der wenigstens eine Füllkörper (32) einen sich im Wesentlichen entlang einer Längsachse der Hydraulikkammer (16) erstreckenden Durchlass (42) für Hydraulikfluid aufweist.

8. Fahrzeugbremse nach einem der Ansprüche 1 bis 7, **dadurch gekennzeichnet,**
**dass** der wenigstens eine Füllkörper (32) aus einem inkompressiblen Material besteht.

9. Fahrzeugbremse nach einem der Ansprüche 1 bis 8, **dadurch gekennzeichnet,**
**dass** eine Verdrehsicherung in Gestalt einer in den Füllkörper (32) eingreifenden Rippe (34) vorgesehen ist.

10. Fahrzeugbremse nach einem der Ansprüche 1 bis 9, **dadurch gekennzeichnet,**
**dass** der Füllkörper (32) radial außen mit Rippen versehen ist.

## Claims

1. Hydraulic vehicle brake (10) having a hydraulic chamber (16) for receiving hydraulic fluid and having a brake piston (18) that delimits the hydraulic chamber (16), wherein at least one filling body (32) is provided inside the hydraulic chamber (16) for reducing the hydraulic fluid intake, **characterized in that** the at least one filling body (32) is associated with a mechanical locking device (20) for the brake piston (18) extending into the hydraulic chamber (16).

2. Vehicle brake according to claim 1, **characterized in that** the at least one filling body (32) is a separate component that is fastened mechanically inside the hydraulic chamber (16) to the locking device (20) of the vehicle brake.

3. Vehicle brake according to claim 1 or 2, **characterized in**
**that** the at least one filling body (32) is provided on the outside of the locking device (20).

4. Vehicle brake according to claims 1 to 3, **characterized in that** the at least one filling body (32) is fastened to the locking device (20) by means of a connection element, in particular by means of a fixing ring (46) having retaining arms (48).

5. Vehicle brake according to claim 1 or 3, **characterized in that** the at least one filling body (32) is provided loosely in relation to the locking device (20).

6. Vehicle brake according to one of claims 1 to 5, **characterized in that** the filling body (32) or an entirety of a plurality of filling bodies is of a substantially annular or hollow-cylindrical shape.

7. Vehicle brake according to one of claims 1 to 6, **characterized in that** the at least one filling body (32) has a passage (42) for hydraulic fluid that extends substantially along a longitudinal axis of the hydraulic chamber (16).

8. Vehicle brake according to one of claims 1 to 7, **characterized in that** the at least one filling body (32) is made of an incompressible material.

9. Vehicle brake according to one of claims 1 to 8, **characterized in that** an anti-rotation element is provided in the form of a rib (34), wherein the rib (34) engages in the filling body (32).

10. Vehicle brake according to one of claims 1 to 9, **characterized in that** the filling body (32) is provided with ribs radial on the outside.

## Revendications

1. Frein hydraulique de véhicule (10) comportant une chambre hydraulique (16) destinée à recevoir un fluide hydraulique et un piston de frein (18) délimitant ladite chambre hydraulique (16), au moins un corps de remplissage (32) étant prévu à l'intérieur de la chambre hydraulique (16) pour réduire la capacité de réception de fluide hydraulique, **caractérisé en ce que** ledit corps de remplissage (32) est associé à un dispositif d'immobilisation mécanique (20) pour le piston de frein (18), lequel dispositif s'étend dans la chambre hydraulique (16).

2. Frein de véhicule selon la revendication 1, **caractérisé en ce que**
ledit corps de remplissage (32) constitue une pièce distincte qui est fixée mécaniquement au dispositif d'immobilisation (20) du frein du véhicule à l'intérieur de la chambre hydraulique (16).

3. Frein de véhicule selon la revendication 1 ou 2, **caractérisé en ce que**
ledit corps de remplissage (32) est prévu à l'extérieur sur le dispositif d'immobilisation (20).

4. Frein de véhicule selon l'une des revendications 1 à 3, **caractérisé en ce que**
ledit corps de remplissage (32) est fixé au dispositif d'immobilisation (20) au moyen d'un élément de liaison, en particulier au moyen d'une bague de fixation (46) munie de bras de support (48).

5. Frein de véhicule selon la revendication 1 ou 3, **caractérisé en ce que**
ledit corps de remplissage (32) est prévu non fixé par rapport au dispositif d'immobilisation (20).

6. Frein de véhicule selon l'une des revendications 1 à 5, **caractérisé en ce que**
ledit corps de remplissage (32) ou un ensemble constitué par plusieurs corps de remplissage se présente sous une forme pour l'essentiel annulaire ou cylindrique creuse.

7. Frein de véhicule selon l'une des revendications 1 à 6, **caractérisé en ce que** ledit corps de remplissage (32) présente un passage (42) servant à laisser passer le fluide hydraulique et s'étendant pour l'essentiel le long d'un axe longitudinal de la chambre hydraulique (16).

8. Frein de véhicule selon l'une des revendications 1 à 7, **caractérisé en ce que** ledit corps de remplissage (32) est constitué par un matériau incompressible.

9. Frein de véhicule selon l'une des revendications 1 à 8, **caractérisé en ce qu'**il est prévu un dispositif de blocage en rotation se présentant sous la forme d'une nervure (34) qui pénètre dans le corps de remplissage (32).

10. Frein de véhicule selon l'une des revendications 1 à 9, **caractérisé en ce que** le corps de remplissage (32) est radialement à l'extérieur muni de nervures.
